# EUROPEAN PATENT APPLICATION

(11) **EP 4 585 523 A1**
(43) Date of publication of application: **16.07.2025**
(21) Application number: 23862869.7
(22) Date of filing: 09.08.2023
(51) Int. Cl.: B64U 10/14, B64U 101/64

(54) **FLYING DEVICE AND CONTROL METHOD THEREFOR**

(30) Priority: 08.09.2022 JP 2022143257
(71) Applicant: Ishikawa Energy Research Co., Ltd., Ota-shi, Gunma 379-2304 (JP); KUBOTA CORPORATION, Osaka-shi, Osaka 556-8601 (JP)
(72) Inventor: ISHIKAWA Mitsuru, Ota-shi, Gunma 379-2304 (JP); ONO Yasutoshi, Ota-shi, Gunma 379-2304 (JP)
(74) Representative: Plasseraud IP
(86) International application number: PCT/JP2023/029074
(87) International publication number: WO 2024/053327

(57) **Abstract**

Provided is a flying apparatus and a method for controlling the same which are capable of preventing the flying apparatus from flying in a state where the weight of a transported body is excessive. A flying apparatus 10 comprises: an airframe base unit 16; a rotor 11; a motor 12; a calculation control unit 15; and a weight detecting unit 17. The rotor 11 rotates to generate thrust for causing the airframe base unit 16 to float. The motor 12 rotationally drives the rotor 11. The weight detecting unit 17 detects a weight value of a transported body 18. If the weight value detected by the weight detecting unit 17 exceeds a threshold weight value, the calculation control unit 15 does not permit takeoff.

## Description

### TECHNICAL FIELD

The present invention relates to a flying apparatus and a method for controlling the same.

### BACKGROUND ART

A flying apparatus capable of flying in the air in an unmanned manner has been conventionally known. Such a flying apparatus is capable of flying in the air with thrust of a rotor which is rotationally driven around a vertical axis.

As the field to which flying apparatuses are applied, for example, a transportation field, a measurement field, an imaging field, an agriculture field, and the like are considered. In the case where a flying apparatus is applied to such a field, the flying apparatus is equipped with various devices or drugs.

When considering stably flying a flying apparatus, it is necessary to measure the weight of a transported body to be transported by the flying apparatus. Patent Literature 1 describes an invention for estimating the weight of a tank which is an example of a transported body included in a flying apparatus.

In Patent Literature 1, a load cell as a weight measuring device is included. By using the load cell, a difference in weight from the weight of an empty tank can be measured, and a remaining amount of an attached tank during crop-dusting can be detected. Hence, it is possible to detect the remaining amount of an agricultural chemical without using a flowmeter.

### CITATION LIST

### PATENT LITERATURE

Patent Literature 1: Japanese Patent Application Publication No. 2020-117203

### SUMMARY OF INVENTION

### TECHNICAL PROBLEM

However, in the flying apparatus described in the above-described Patent Literature 1, there is room for improvement from the view point of stably flying the flying apparatus.

Specifically, the invention described in Patent Literature 1 makes it possible to measure the weight of a tank, which is a transported body. However, there is a problem that in the case where the weight of the transported body is excessive, the flying apparatus becomes unstable due to the weight of the transported body.

The present invention has been made in view of the above-described circumstances, and an object thereof is to provide a flying apparatus and a method for controlling the same which are capable of preventing the flying apparatus from flying in a state where the weight of a transported body is excessive.

### SOLUTION TO PROBLEM

The present invention is a flying apparatus which transports a transported body, the flying apparatus comprising: an airframe base unit; a rotor; a motor; a calculation control unit; and a weight detecting unit, wherein the rotor rotates to generate thrust for causing the airframe base unit to float, the motor rotationally drives the rotor, the weight detecting unit detects a weight value of the transported body, and if the weight value detected by the weight detecting unit exceeds a threshold weight value, the calculation control unit does not permit takeoff.

In addition in the flying apparatus of the present invention, the weight detecting unit is part of a function of the calculation control unit, and calculates the weight value from an instruction signal used for controlling the number of revolutions of the motor.

In addition, in the flying apparatus of the present invention, the instruction signal is a DUTY value or a value derived from the DUTY value.

In addition, in the flying apparatus of the present invention, the weight detecting unit is disposed between the airframe base unit and the transported body.

In addition, in the flying apparatus of the present invention, the weight detecting unit is a placement-type measuring device on which the flying apparatus is placed.

The present invention is a method for controlling a flying apparatus which transports a transported body, the flying apparatus including: an airframe base unit; a rotor; a motor; and a weight detecting unit, wherein the rotor rotates to generate thrust for causing the airframe base unit to float, the motor rotationally drives the rotor, and if a weight value detected by the weight detecting unit exceeds a threshold weight value, takeoff is not permitted.

In the method for controlling a flying apparatus of the present invention, the weight value is calculated from an instruction signal used for controlling the number of revolutions of the motor.

In the method for controlling a flying apparatus of the present invention, the instruction signal is a DUTY value or a value derived from the DUTY value.

In the method for controlling a flying apparatus of the present invention, the weight value is detected by the weight detecting unit which is disposed between the airframe base unit and the transported body.

In the method for controlling a flying apparatus of the present invention, the weight value is detected by a placement-type measuring device on which the flying apparatus is placed.

### ADVANTAGEOUS EFFECTS OF INVENTION

The present invention is a flying apparatus which transports a transported body, the flying apparatus comprising: an airframe base unit; a rotor; a motor; a calculation control unit; and a weight detecting unit, wherein the rotor rotates to generate thrust for causing the airframe base unit to float, the motor rotationally drives the rotor, the weight detecting unit detects a weight value of the transported body, and if the weight value detected by the weight detecting unit exceeds a threshold weight value, the calculation control unit does not permit takeoff. According to the flying apparatus of the present invention, in the case where the weight value of the transported body exceeds the threshold weight value, the takeoff of the flying apparatus is not permitted, making it possible to prevent the flying apparatus from flying in a state of so-called overloading. Hence, it is possible to prevent the state of flight of the flying apparatus from being inhibited by overloading.

In addition, in the flying apparatus of the present invention, the weight detecting unit is part of a function of the calculation control unit, and calculates the weight value from an instruction signal used for controlling the number of revolutions of the motor. According to the flying apparatus of the present invention, the flying apparatus can be configured without using a dedicated weight sensor by calculating the weight value based on the instruction signal.

In addition, in the flying apparatus of the present invention, the instruction signal is a DUTY value or a value derived from the DUTY value. According to the flying apparatus of the present invention, the weight value of the transported body can be simply and precisely detected by detecting the weight value of the transported body based on the DUTY value.

In addition, in the flying apparatus of the present invention, the weight detecting unit is disposed between the airframe base unit and the transported body. According to the flying apparatus of the present invention, the weight of the transported body can be directly detected by the weight detecting unit.

In addition, in the flying apparatus of the present invention, the weight detecting unit is a placement-type measuring device on which the flying apparatus is placed. According to the flying apparatus of the present invention, the weight of the transported body can be directly detected by the placement-type measuring device.

The present invention is a method for controlling a flying apparatus which transports a transported body, the flying apparatus including: an airframe base unit; a rotor; a motor; and a weight detecting unit, wherein the rotor rotates to generate thrust for causing the airframe base unit to float, the motor rotationally drives the rotor, and if a weight value detected by the weight detecting unit exceeds a threshold weight value, takeoff is not permitted. According to the method for controlling a flying apparatus, in the case where the weight value of the transported body exceeds the threshold weight value, the takeoff of the flying apparatus is not permitted, making it possible to prevent the flying apparatus from flying in a state of so-called overloading. Hence, it is possible to prevent the state of flight of the flying apparatus from being inhibited by overloading.

In the method for controlling a flying apparatus of the present invention, the weight value is calculated from an instruction signal used for controlling the number of revolutions of the motor. According to the method for controlling a flying apparatus, the flying apparatus can be configured without using a dedicated weight sensor by calculating the weight value based on the instruction signal.

In the method for controlling a flying apparatus of the present invention, the instruction signal is a DUTY value or a value derived from the DUTY value. According to the method for controlling a flying apparatus of the present invention, the weight value of the transported body can be simply and precisely detected by detecting the weight value of the transported body based on the DUTY value.

In the method for controlling a flying apparatus of the present invention, the weight value is detected by the weight detecting unit which is disposed between the airframe base unit and the transported body. According to the method for controlling a flying apparatus, the weight of the transported body can be directly detected by the weight detecting unit.

In the method for controlling a flying apparatus of the present invention, the weight value is detected by a placement-type measuring device on which the flying apparatus is placed. According to the method for controlling a flying apparatus of the present invention, the weight of the transported body can be directly detected by the method for controlling a flying apparatus.

### BRIEF DESCRIPTION OF DRAWINGS

[Fig. 1A] Fig. 1A is a top view showing a flying apparatus according to an embodiment of the present invention.
[Fig. 1B] Fig. 1B is a side view showing the flying apparatus according to the embodiment of the present invention.
[Fig. 2] Fig. 2 is a block diagram showing a connection configuration of the flying apparatus according to the embodiment of the present invention.
[Fig. 3] Fig. 3 is a flowchart showing a method for calculating an estimated weight value of a transported body in the flying apparatus according to the embodiment of the present invention.

### DESCRIPTION OF EMBODIMENTS

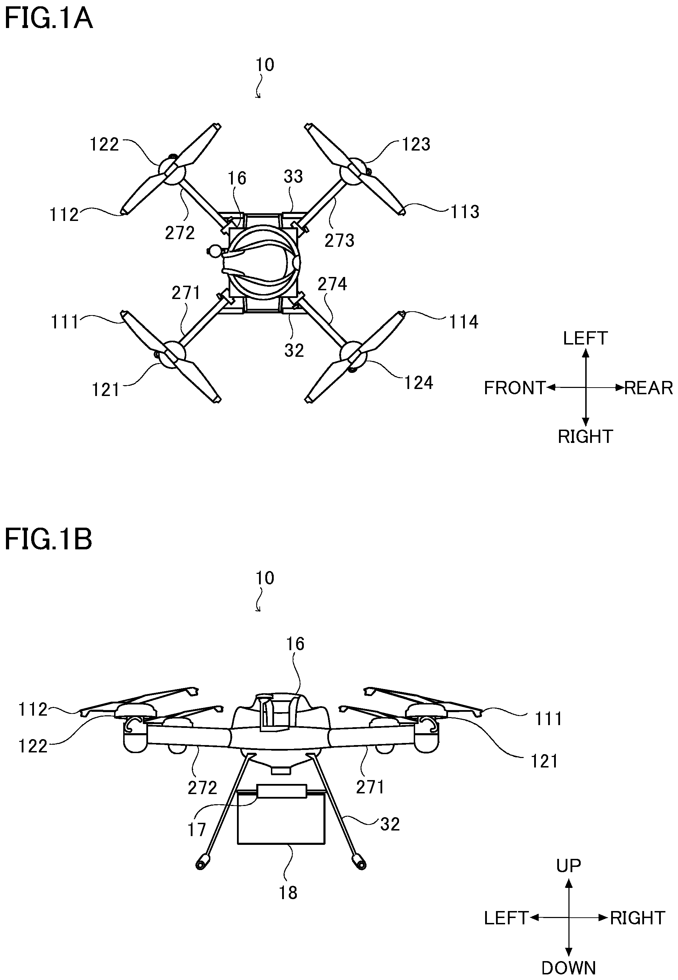

Hereinafter, a flying apparatus 10 and a method for controlling the same according to the present embodiment will be described with reference to the drawings. In the following description, the same members are denoted by the same reference signs in principle, and repetitive description will be omitted. In addition, in the following description, upper, lower, front, rear, left and right directions are used, where the left and right directions are left and right directions in the case where the flying apparatus 10 is viewed from the front side in Fig. 1A.

Fig. 1A is a top view showing the flying apparatus 10, and Fig. 1B is a side view showing the flying apparatus 10.

With reference to Fig. 1A, the flying apparatus 10 mainly includes an airframe base unit 16, a power unit which is mounted on the airframe base unit 16 and which is not shown here, an arm 271 and the like which extend from peripheral portions of the airframe base unit 16 to the periphery, a motor 121 and the like which are disposed in outer end portions of the arm 271 and the like, and a rotor 111 and the like which are rotated by the motor 121 and the like. In the following description, the motor 121 and the like are referred to collectively as the motors 12, and the rotor 111 and the like are referred to collectively as the rotors 11.

The flying apparatus 10 is capable of floating and moving in the air by causing the motor 121 and the like to rotate the rotor 111 and the like at predetermined rotation speeds by using an electric power obtained from a battery housed in the airframe base unit 16. The flying apparatus 10 is a device as transport means for transporting a transported body 18, which will be described later, from a certain location to another location, for example. Here, the flying apparatus 10 may also be a flying apparatus which rotates the rotors 111 using an engine mounted on the airframe base unit 16 as a drive source.

The airframe base unit 16 is disposed at the center of the flying apparatus 10, and various devices, which are not shown here, are housed in the airframe base unit 16. An outer surface of the airframe base unit 16 is covered with a synthetic resin plate or a steel plate which is molded in a predetermined shape.

The arm 271, the arm 272, the arm 273, and the arm 274 extend outward from the airframe base unit 16.

The motor 121 and the rotor 111 are disposed in the outer end portion of the arm 271. The motor 122 and the rotor 112 are disposed in the outer end portion of the arm 272. The motor 123 and the rotor 113 are disposed in the outer end portion of the arm 273. The motor 124 and the rotor 114 are disposed in the outer end portion of the arm 274. Here, the rotors 11 rotate around vertical axes to generate thrust for causing the airframe base unit 16 to float. In addition, the motors 12 rotationally drive the rotors 11.

With reference to Fig. 1B, leg portions 32, which come into contact with the ground at the time of landing, are disposed on a lower portion of the airframe base unit 16. The leg portions 32 are members which are also referred to as skids, and in the state where the flying apparatus 10 is landing, lower ends of the leg portions 32 come into contact with the ground.

The transported body 18 is placed below the airframe base unit 16. The transported body 18 is an article to be transported by the flying apparatus 10, and is, for example, baggage, drugs, fertilizers, or the like. Although the transported body 18 is fixed below the airframe base unit 16 here, the transported body 18 may be fixed above the airframe base unit 16.

A weight detecting unit 17 is a sensor for detecting the weight of the transported body 18. The weight detecting unit 17 is, for example, a load cell. Here, in the case of calculating a weight value of the transported body 18 from a DUTY value as described later, the flying apparatus 10 may be configured without the weight detecting unit 17.

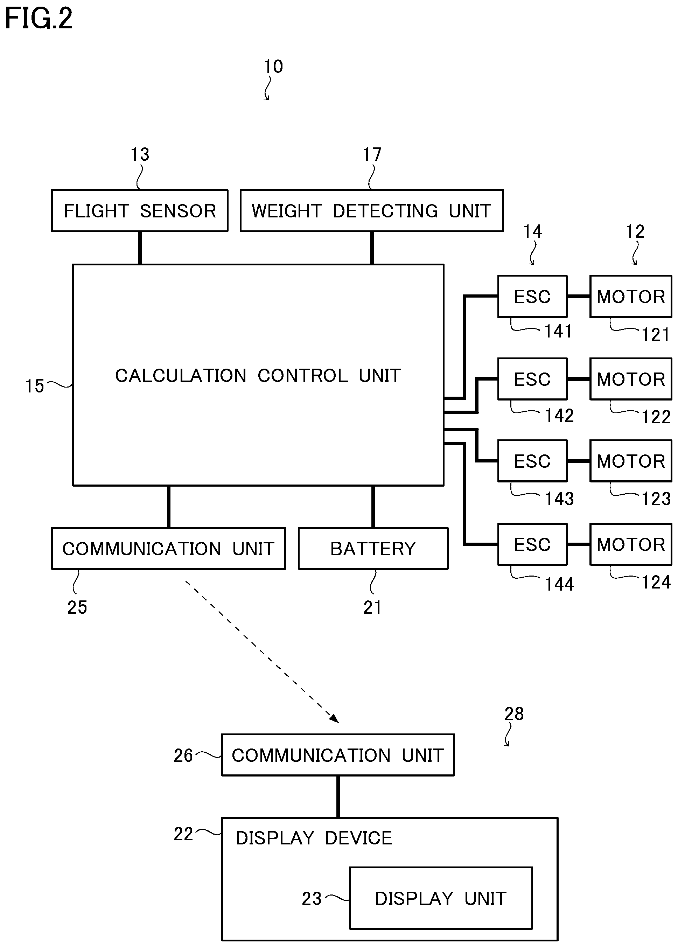

Fig. 2 is a block diagram showing a connection configuration of the flying apparatus 10.

The flying apparatus 10 mainly includes the motor 121 and the like, a flight sensor 13, a power converting unit 14, a calculation control unit 15, the motors 12, and the weight detecting unit 17, and transports the transported body 18. Moreover, the flying apparatus 10 includes a communication unit 25, a battery 21, and the like. In addition, an operating device 28 is an operating device 28 which the operator who operates the flying apparatus 10 can manipulate on the ground. In addition, the operating device 28 including a communication unit 26, a display device 22, and a display unit 23 is set near the operator.

The flight sensor 13 measures physical amounts which act on the airframe base unit 16, and transmits signals indicating the magnitudes of the physical amounts to the calculation control unit 15. Sensors included in the flight sensor 13 are, for example, an acceleration sensor, an angular rate sensor, a geomagnetic sensor, an atmospheric pressure sensor, and a GNSS antenna. The acceleration sensor detects changes in tilt and movement as physical amounts. The angular rate sensor detects changes in tilt and direction as physical amounts. The geomagnetic sensor detects a direction as a physical amount by means of a magnetic force. The atmospheric pressure sensor detects the height as a physical amount. The GNSS antenna specifies the position.

The calculation control unit 15 includes a calculation device composed of a CPU (Central Processing Unit) and a storage device composed of a RAM (Random Access Memory) and a ROM (Read Only Memory), and controls the operation of the entire flying apparatus 10. In addition, as described later, the calculation control unit 15 adjusts the amount of electric power to be supplied to the motor 121 and the like based on signals inputted from the flight sensor 13. Moreover, as described later, the calculation control unit 15 calculates a weight value of the transported body 18 based on the magnitude of an instruction signal. In addition, the calculation control unit 15 includes a flight controller and a companion controller which are not shown here. Moreover, the calculation control unit 15 also serves as the weight detecting unit 17 in the case of calculating the weight value of the transported body 18 based on a DUTY value.

Moreover, the calculation control unit 15 generates an instruction signal for obtaining a predetermined positional posture, moving speed, and the like of the flying apparatus 10 based on the signals inputted from the flight sensor 13. As this instruction signal, a DUTY value in the PWM control or a value derived from the DUTY value can be employed, for example. Since the present embodiment includes four motors 121, 122, 123, and 124, DUTY values are calculated for the respective motors 121.

The power converting unit 14 includes an ESC 141 to an ESC 144. Here, ESC is abbreviation of Electric Speed Controller, and is an electronic device which controls the number of revolutions of the motor 12. The ESC 141 is disposed between the motor 121 and the calculation control unit 15, and controls the number of revolutions of the motor 121. The ESC 142 is disposed between the motor 122 and the calculation control unit 15, and controls the number of revolutions of the motor 122. The ESC 143 is disposed between the motor 123 and the calculation control unit 15, and controls the number of revolutions of the motor 123. The ESC 144 is disposed between the motor 124 and the calculation control unit 15, and controls the number of revolutions of the motor 124. When the DUTY values inputted from the calculation control unit 15 are large, the ESC 141 to the ESC 144 rotate the motor 121 to the motor 124 at high speeds.

The weight detecting unit 17 detects the weight of the aforementioned transported body 18, and transmits a signal indicating the magnitude of the weight to the calculation control unit 15. The weight detecting unit 17 may be included in the flying apparatus 10, or may be included outside of the flying apparatus 10.

In the case where the weight detecting unit 17 is included in the flying apparatus 10, the weight detecting unit 17 is disposed between the airframe base unit 16 of the flying apparatus 10 and the transported body 18, and the weight of the transported body 18 acting on the weight detecting unit 17 is detected by this.

On the other hand, in the case where the weight detecting unit 17 is included outside of the flying apparatus 10, a placement-type measuring device on which the flying apparatus 10 itself can be placed may be employed as the weight detecting unit 17. In the case where the placement-type measuring device is employed, a total weight is measured by placing the flying apparatus 10 on which the transported body 18 is mounted on the upper surface of the placement-type measuring device, and a device weight which is the weight of the flying apparatus 10 itself is subtracted from the total weight. In this way, the weight value of the transported body 18 can be calculated. A signal indicating the weight value of the transported body 18, which has been calculated in the placement-type measuring device, is inputted into the calculation control unit 15 via the communication unit 25.

Here, the basic flight operation of the flying apparatus 10 will be described. The flying apparatus 10 is capable of executing each operation of a takeoff operation, an ascending operation, a hovering operation, a moving operation, a descending operation, and a landing operation. Each operation of the flying apparatus 10 is executed by the calculation control unit 15 based on a command transmitted from the operating device 28 based on the operation of the operator.

In each of the above-described operations, the calculation control unit 15 outputs an instruction signal to the power converting unit 14 based on information inputted from the acceleration sensor and the angular rate sensor included in the flight sensor 13, and adjusts the rotation speeds of the motor 121 to the motor 124 to achieve a predetermined posture of the flying apparatus 10.

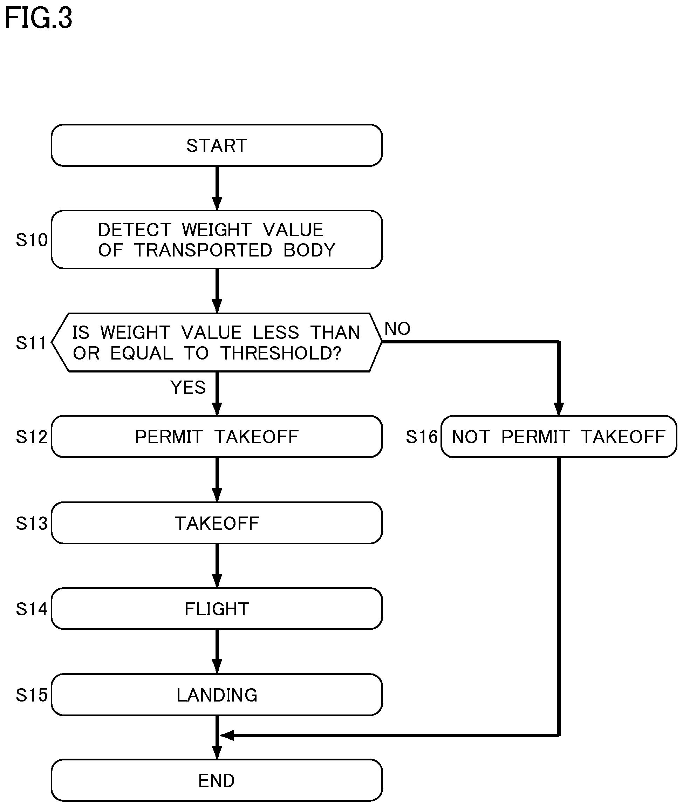

In the takeoff operation, the calculation control unit 15 causes the weight detecting unit 17 and the like to operate to detect the weight of the weight detecting unit 17. Then, if the weight of the weight detecting unit 17 is less than or equal to a threshold weight value, which will be described later, the calculation control unit 15 rotates the motors 12 at a predetermined speed to cause the flying apparatus 10 to take off. The detail of the takeoff operation will be described later with reference to Fig. 3.

In the ascending operation, the calculation control unit 15 rotates the motors 12 at relatively high speeds such that the flying apparatus 10 ascends to a predetermined height. The calculation control unit 15 basically outputs substantially equal DUTY values to the ESC 141 to the ESC 144 such that the rotation speeds of the motor 121 to the motor 124 become substantially equal to one another. In addition, based on information inputted from the atmospheric pressure sensor included in the flight sensor 13, once the flying apparatus 10 has ascended to a predetermined height, the calculation control unit 15 executes the hovering operation which maintains the height of the flying apparatus 10 at a substantially constant level.

In the hovering operation, the calculation control unit 15 adjusts the rotation speeds of the motor 121 to the motor 122 such that the height of the flying apparatus 10 becomes substantially constant based on information inputted from the atmospheric pressure sensor included in the flight sensor 13. Here, the calculation control unit 15 basically outputs substantially equal DUTY values to the ESC 141 to the ESC 144 to make the rotation speeds of the motor 121 to the motor 124 substantially equal to one another.

In the moving operation, the calculation control unit 15 adjusts the rotation speeds of the motor 121 to the motor 124 such that the flying apparatus 10 can move at a predetermined speed in each of the front, rear, left, and right directions. For example, the calculation control unit 15 makes the rotation speeds of the motor 121 and the motor 122 higher than the rotation speeds of the motor 123 and the motor 124. That is, the calculation control unit 15 makes the DUTY values to be outputted to the ESC 141 and the ESC 142 larger than the DUTY values to be outputted to the ESC 143 and the ESC 144. In this way, with reference to Fig. 1A, the rotor 111 and the rotor 112 rotate at higher speeds than the rotor 113 and the rotor 114, so that the airframe base unit 16 of the flying apparatus 10 is brought into a tilted posture and the flying apparatus 10 moves toward a predetermined direction. Thereafter, when the calculation control unit 15 has recognized that the flying apparatus 10 has reached to a predetermined position based on an output of the GNSS antenna or the like included in the flight sensor 13, the calculation control unit 15 executes the braking operation. For example, the calculation control unit 15 makes the rotation speeds of the motor 121 and the motor 122 lower than the rotation speeds of the motor 123 and the motor 124. That is, the calculation control unit 15 makes the DUTY values to be outputted to the ESC 143 and the ESC 144 larger than the DUTY values to be outputted to the ESC 141 and the ESC 142. In this way, with reference to Fig. 1A, the rotor 111 and the rotor 112 rotate at lower speeds than the rotor 113 and the rotor 114, so that a planar movement of the flying apparatus 10 can be stopped. Thereafter, the calculation control unit 15 executes the hovering operation.

In the descending operation, the calculation control unit 15 rotates the motors 12 at relatively slow speeds such that the flying apparatus 10 descends to a predetermined height. The calculation control unit 15 basically outputs substantially equal DUTY values to the ESC 141 to the ESC 144 such that the rotation speeds of the motor 121 to the motor 124 become substantially equal to one another. In addition, once the flying apparatus 10 has descended to a predetermined height based on information inputted from the atmospheric pressure sensor included in the flight sensor 13, the calculation control unit 15 executes the hovering operation which maintains the height of the flying apparatus 10 at a substantially constant level.

In the landing operation, the calculation control unit 15 rotates the motors 12 at relatively slow speeds such that the flying apparatus 10 descends to a landing surface such as the ground. The calculation control unit 15 basically outputs substantially equal DUTY values to the ESC 141 to the ESC 144 such that the rotation speeds of the motor 121 to the motor 124 become substantially equal to one another. In addition, once the flying apparatus 10 has come into contact with the landing surface, the calculation control unit 15 stops all the motors 12.

Fig. 3 is a flowchart showing an operation of the flying apparatus 10, mainly the takeoff operation of the flying apparatus 10, in the flying apparatus 10. In the present embodiment, as described in detail below, the calculation control unit 15 is configured such that the flying apparatus 10 does not take off when a weight value of the transported body 18 detected by the weight detecting unit 17 has exceeded a threshold weight value.

In step S10, the calculation control unit 15 detects the weight value of the transported body 18 before the flying apparatus 10 takes off. The method for detecting the weight value of the transported body 18 includes a method which uses the weight detecting unit 17 included in the flying apparatus 10 and a method which uses instruction signals transmitted from the calculation control unit 15 as described later. In the method which uses the weight detecting unit 17, the weight detecting unit 17 detects the weight value of the transported body 18, and a signal indicating the weight value is transmitted to the calculation control unit 15. The method which uses instruction signals will be described later.

In step S11, the calculation control unit 15 determines whether or not the weight value is less than or equal to the threshold weight value. Specifically, the threshold weight value has been set in advance depending on the flight performance of the flying apparatus 10. The threshold weight value is a weight of the transported body 18 which the flying apparatus 10 can safely transport by flight. The calculation control unit 15 compares, for example, the weight value of the transported body 18 detected by the weight detecting unit 17 in step S10 and the threshold weight value.

In the case of YES in step S11, that is, in the case where the weight value is less than or equal to the threshold weight value, the calculation control unit 15 proceeds to step S12.

In the case of NO in step S11, that is, in the case where the weight value exceeds the threshold weight value, the calculation control unit 15 proceeds to step S16.

In step S12, the calculation control unit 15 permits takeoff. That is, the calculation control unit 15 continuously inputs DUTY values, which are instruction signals, to the ESC 141 to the ESC 144, and the ESC 141 to the ESC 144 generate an alternating-current power at predetermined frequencies, and the alternating-current power is inputted into the motor 121 to the motor 124.

In step S13, the calculation control unit 15 executes takeoff. That is, based on the instruction of the calculation control unit 15, the motor 121 to the motor 124 rotate the rotor 111 to the rotor 114 at predetermined rotation speeds. Once upward thrust generated by the rotor 111 to the rotor 114 becomes equal to or more than a predetermined value, the flying apparatus 10 takes off.

In step S14, the calculation control unit 15 flies the flying apparatus 10. Specifically, the flying apparatus 10 executes the ascending operation, the hovering operation, the horizontal moving operation, the descending operation, or the like based on the instruction of the calculation control unit 15.

In step S15, the calculation control unit 15 executes landing. That is, based on a result of calculation of the calculation control unit 15 or an instruction signal inputted by the user via the operating device 28, the flying apparatus 10 descends and lands at a predetermined location, for example, a location at which the flying apparatus 10 took off.

In step S16, the calculation control unit 15 does not permit takeoff. That is, since the weight of the transported body 18 mounted on the flying apparatus 10 has exceeded the threshold weight and the flying apparatus 10 cannot stably fly in this state, the flying apparatus 10 does not fly. In this case, the calculation control unit 15 transmits a signal indicating that the weight of the transported body 18 has exceeded the threshold weight to the operating device 28 via the communication unit 25 and the communication unit 26. In addition, the display unit 23 displays that the weight of the transported body 18 has exceeded the threshold weight. In this way, the operator is allowed to reduce the weight of the transported body 18 so that the weight of the transported body 18 becomes less than or equal to the threshold weight value, and thus, the flying apparatus 10 becomes capable of transporting the transported body 18.

Next, a method for calculating the weight value of the transported body 18 from the DUTY values which are an example of the instruction signals, in step S10 mentioned above will be described.

First, in step S10, when the motors 12 are rotated based on instructions of the calculation control unit 15, that is, when the flying apparatus 10 transitions from the landed state to the takeoff state, the calculation control unit 15 calculates DUTY values as instruction signals based on the aforementioned physical amounts. The calculation control unit 15 outputs the DUTY values based on various pieces of information inputted in step S10, operation conditions, and the like. The calculation control unit 15 calculates the DUTY value for each of the ESC 141 to the ESC 144 shown in Fig. 2. The DUTY values also vary depending on the weight of the flying apparatus 10 including the transported body 18. That is, when the weight of the transported body 18 is large, the entire weight of the flying apparatus 10 including the transported body 18 becomes large, and the DUTY values calculated by the calculation control unit 15 become large. On the other hand, when the weight of the transported body 18 is small, the entire weight of the flying apparatus 10 including the transported body 18 becomes small, and the DUTY values calculated by the calculation control unit 15 become small. Hence, before the flying apparatus 10 flies, the entire weight value of the flying apparatus 10 including the transported body 18 can be calculated from the DUTY values. In addition, the weight value of the transported body 18 itself is known. Hence, the weight value of the transported body 18 only can be calculated by subtracting the weight value of the transported body 18 itself from the entire weight value of the flying apparatus 10 including the transported body 18, which has been obtained from the DUTY values.

Here, in order to precisely estimate the weight of the transported body 18, the calculation control unit 15 may calculate an average DUTY value by averaging the respective DUTY values calculated for the ESC 141 to the ESC 144, and calculate the entire weight value of the flying apparatus 10 including the transported body 18 from the average DUTY value in the same manner as described above. The respective DUTY values calculated for the ESC 141 to the ESC 144 vary depending on the condition of the flying apparatus 10. Hence, by calculating a DUTY average value (instruction signal average value) which is an average value of the four DUTY values, an influence of the condition of the flying apparatus 10 can be eliminated.

Moreover, the calculation control unit 15 can calculate the weight value of the transported body 18 in consideration of the DUTY values or the DUTY average value and voltage values of the motors 12. Specifically, the calculation control unit 15 reads the DUTY values or the DUTY average value and a battery voltage value which is the voltage value of the battery 21. Then, the calculation control unit 15 calculates the weight value of the flying apparatus 10 including the transported body 18 based on a predetermined function using the DUTY values or the DUTY average value and the battery voltage value as variables. In the case where the battery voltage value is low, the calculation control unit 15 increases the DUTY values or the DUTY average value for rotating the motors 12 at predetermined rotation speeds. Hence, if the calculation control unit 15 calculates the weight value of the flying apparatus 10 including the transported body 18 by using only the DUTY values or the DUTY average value as variables, there is a possibility that an estimated remaining amount is excessively calculated. In view of this, in the present embodiment, the weight value of the flying apparatus 10 including the transported body 18 is precisely calculated by correcting the DUTY values or the DUTY average value by using the battery voltage value. Specifically, in the case where the battery voltage value is low, the calculation control unit 15 corrects the DUTY values or the DUTY average value to the negative side. In contrast, in the case where the battery voltage value is high, the calculation control unit 15 corrects the DUTY values or the DUTY average value to the positive side. In this way, the weight value of the transported body 18 can be precisely calculated irrespective of the battery voltage value.

The embodiment of the present invention has been described above; however, the present invention is not limited to this, and modification can be made without departing from the gist of the present invention. In addition, the aforementioned modes can be combined with each other.

For example, although in the aforementioned embodiment, the DUTY values are employed as the instruction signals, other signals can also be used as the instruction signals. For example, a current value or a voltage value of electric power to be supplied to the power converting unit 14 or the motors 12 can be employed as the instruction signal.

In addition, the detection of the weight value of the transported body 18 in step S10 can be conducted in step S14 as well. That is, even in the state where the flying apparatus 10 is flying, the calculation control unit 15 calculates the weight value of the transported body 18 from the DUTY values. Then, if the weight value of the transported body 18 has exceeded the threshold weight value, the calculation control unit 15 lands the flying apparatus 10. In this way, in the state where the flying apparatus 10 is flying, even if it was found that the weight value of the transported body 18 has exceeded the threshold weight value, the flying apparatus 10 can be safely landed.

Moreover, although in the aforementioned embodiment, it was determined whether or not the weight value of the transported body 18 has exceeded the threshold weight value based on only the weight value of the transported body 18, it can be determined whether or not the weight value of the transported body 18 has exceeded the threshold weight value by using a combined weight of the flying apparatus 10 and the transported body 18.

Although in the aforementioned present embodiment, the average value is presented as an example of a value derived from the DUTY values, another value can also be employed. For example, a median can also be employed as a value derived from the DUTY values.

### REFERENCE SIGNS LIST

- 10: flying apparatus
- 11: rotor
- 111: rotor
- 112: rotor
- 113: rotor
- 114: rotor
- 12: motor
- 121: motor
- 122: motor
- 123: motor
- 124: motor
- 13: flight sensor
- 14: power converting unit
- 141: ESC
- 142: ESC
- 143: ESC
- 144: ESC
- 15: calculation control unit
- 16: airframe base unit
- 17: weight detecting unit
- 18: transported body
- 21: battery
- 22: display device
- 23: display unit
- 25: communication unit
- 26: communication unit
- 271: arm
- 272: arm
- 273: arm
- 274: arm
- 28: operating device
- 32: leg portion

## Claims

1. A flying apparatus which transports a transported body, the flying apparatus comprising:
an airframe base unit;
a rotor;
a motor;
a calculation control unit; and
a weight detecting unit, wherein
the rotor rotates to generate thrust for causing the airframe base unit to float,
the motor rotationally drives the rotor,
the weight detecting unit detects a weight value of the transported body, and
if the weight value detected by the weight detecting unit exceeds a threshold weight value, the calculation control unit does not permit takeoff.

2. The flying apparatus according to claim 1, wherein
the weight detecting unit
is part of a function of the calculation control unit, and
calculates the weight value from an instruction signal used for controlling the number of revolutions of the motor.

3. The flying apparatus according to claim 2, wherein the instruction signal is a DUTY value or a value derived from the DUTY value.

4. The flying apparatus according to claim 1, wherein the weight detecting unit is disposed between the airframe base unit and the transported body.

5. The flying apparatus according to claim 1, wherein the weight detecting unit is a placement-type measuring device on which the flying apparatus is placed.

6. A method for controlling a flying apparatus which transports a transported body, the flying apparatus including: an airframe base unit; a rotor; a motor; and a weight detecting unit, wherein
the rotor rotates to generate thrust for causing the airframe base unit to float,
the motor rotationally drives the rotor, and
if a weight value detected by the weight detecting unit exceeds a threshold weight value, takeoff is not permitted.

7. The method for controlling a flying apparatus according to claim 6, wherein the weight value is calculated from an instruction signal used for controlling the number of revolutions of the motor.

8. The method for controlling a flying apparatus according to claim 7, wherein the instruction signal is a DUTY value or a value derived from the DUTY value.

9. The method for controlling a flying apparatus according to claim 6, wherein the weight value is detected by the weight detecting unit which is disposed between the airframe base unit and the transported body.

10. The method for controlling a flying apparatus according to claim 6, wherein the weight value is detected by a placement-type measuring device on which the flying apparatus is placed.
